(19) Europäisches Patentamt
European Patent Office
Office européen des brevets

(11) **EP 4 746 069 A1**

(12) # EUROPEAN PATENT APPLICATION

(43) Date of publication:
**20.05.2026 Bulletin 2026/21**

(21) Application number: **25211895.5**

(22) Date of filing: **29.10.2025**

(51) International Patent Classification (IPC):
**H01M 4/36** (2006.01)          **C01G 53/50** (2025.01)
**H01M 4/505** (2010.01)         **H01M 4/525** (2010.01)

(52) Cooperative Patent Classification (CPC):
**H01M 4/525; C01G 53/50; H01M 4/366;**
**H01M 4/505;** H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **31.10.2024 KR 20240152560**

(71) Applicant: **ECOPRO BM CO., LTD.**
**Cheongju-si, Chungcheongbuk-do 28116 (KR)**

(72) Inventors:
 • **CHOI, Jin Hyeok**
   **Cheongju-si, Chungcheongbuk-do 28116 (KR)**

 • **BAE, Jin Ho**
   **Cheongju-si, Chungcheongbuk-do 28116 (KR)**
 • **SHIN, Se Hee**
   **Cheongju-si, Chungcheongbuk-do 28116 (KR)**
 • **LEE, Seul Gi**
   **Cheongju-si, Chungcheongbuk-do 28116 (KR)**
 • **KIM, Jin Kyu**
   **Cheongju-si, Chungcheongbuk-do 28116 (KR)**

(74) Representative: **Vossius & Partner**
**Patentanwälte Rechtsanwälte mbB**
**Siebertstraße 3**
**81675 München (DE)**

(54) **POSITIVE ELECTRODE ACTIVE MATERIAL AND LITHIUM SECONDARY BATTERY COMPRISING THE SAME**

(57)    The present disclosure relates to a positive electrode active material and a lithium secondary battery including the same, and more particularly, to a positive electrode active material and a lithium secondary battery including the same, in which electrochemical characteristics and stability are improved by removing lithium-containing impurities present on the surface of a lithium composite oxide without a washing process.

EP 4 746 069 A1

## Description

BACKGROUND

### 1. Field of the Invention

The present disclosure relates to a positive electrode active material and a lithium secondary battery including the same, and more particularly, to a positive electrode active material and a lithium secondary battery including the same, in which electrochemical characteristics and stability are improved by removing lithium-containing impurities present on the surface of a lithium composite oxide without a washing process.

### 2. Discussion of Related Art

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be $LiCoO_2$, $LiMn_2O_4$, $LiNiO_2$, $LiMnO_2$, or an oxide in which Ni, Co, Mn or Al is complexed as disclosed in Korean Unexamined Patent Application Publication No. 10-2015-0069334 (published June 23, 2015).

Among the positive electrode active materials, $LiCoO_2$ is most widely used due to excellent lifetime characteristics and charge/discharge efficiency, but it is expensive due to cobalt being a limited resource, which is used as a raw material, and thus has a disadvantage of limited price competitiveness.

Lithium manganese oxides such as $LiMnO_2$ and $LiMn_2O_4$ have advantages of excellent thermal safety and low costs, but also have problems of small capacity and poor high-temperature characteristics. In addition, while a $LiNiO_2$-based positive electrode active material exhibits a battery characteristic such as a high discharge capacity, due to cation mixing between Li and a transition metal, it is difficult to synthesize the $LiNiO_2$-based positive electrode active material, thereby causing a big problem in rate characteristics.

In addition, depending on the intensification of such cation mixing, a large amount of Li by-products is generated. Since most of the Li by-products consist of LiOH and $Li_2CO_3$, they may cause gelation in preparation of a positive electrode paste or cause gas generation according to repeated charge/discharge after the manufacture of an electrode. Among the Li by-products, residual $Li_2CO_3$ increases the cell swelling phenomenon and thus acts a cause of reducing lifetime characteristics.

To compensate for these shortcomings, as a positive electrode active material for a secondary battery, the demand for a high-Ni positive electrode active material having an Ni content of 50% or more has started to increase. However, such a high-Ni positive electrode active material exhibits high capacity, and as the Ni content in the positive electrode active material increases, there is a problem of causing structural instability due to Li/Ni cation mixing. The structural instability of the positive electrode active material may lead to rapid deterioration of a lithium secondary battery not only at high temperatures but also at room temperature.

Accordingly, it is necessary to develop a positive electrode active material to compensate for the problems of such high-Ni positive electrodes.

RELATED ART DOCUMENTS

Patent Documents

(Patent Document 1) Korean Laid-Open Patent Publication No. 10-2015-0069334 (published on June 23, 2015)

(Patent Document 2) Korean Registered Patent No. 10-1651338 (published on Aug. 25, 2016)

## SUMMARY OF THE INVENTION

In the lithium secondary battery market, the growth of lithium secondary batteries for electric vehicles plays a leading role, and the demand for positive electrode active materials used in lithium secondary batteries is also constantly changing.

For example, the use of nickel-based lithium composite oxides, which have high energy capacity per weight, has been steadily increasing.

Accordingly, the present disclosure is directed to providing a positive electrode active material capable of improving the electrochemical characteristics and stability of a lithium secondary battery.

The present disclosure is also directed to providing a lithium secondary battery comprising a positive electrode including the lithium composite oxide defined herein.

The objects of the present disclosure are not limited to the above-mentioned objects, and other objects and advantages of the present disclosure which are not mentioned can be understood from the following description and more clearly understood from exemplary embodiments of the present disclosure. In addition, it will be readily apparent that the objects and advantages of the present disclosure may be realized by means indicated in the claims and combinations thereof.

Conventionally, a technique for reducing the surface side reactions of a positive electrode active material and thus improving stability as an element such as a light element (typically, an element such as boron) in the positive electrode active material is allowed to be present in the form of an oxide has been suggested (Korean Patent Publication No. 10-1651338, published August 25, 2016).

However, by forming the light element-containing oxide on the surface of the positive electrode active material, side reactions between the positive electrode active material and an electrolyte may be reduced, but conversely, there is a problem in that the content of lithium-containing impurities on the surface of the positive electrode active material is increased due to the reaction between the positive electrode active material and the light element-containing raw material.

This problem is that at least some of the lithium-containing impurities present on the surface of the positive electrode active material react with the light element-containing raw material, thereby being converted into a light element-containing oxide, but the amount of the lithium-containing impurities converted into the light element-containing oxide is ultimately smaller than the content of the lithium-containing impurities generated by the reaction between the positive electrode active material and the light element-containing raw material.

According to one aspect of the present disclosure to solve the above-mentioned technical problems, there is provided a positive electrode active material comprising a lithium composite oxide capable of lithium intercalation and deintercalation, wherein the lithium composite oxide comprises boron and sulfur, and a coating layer comprising a sulfur-based compound is present on at least a portion of a surface region of the lithium composite oxide.

Preferably, the lithium composite oxide may comprise at least one transition metal selected from the group consisting of nickel, cobalt, manganese, and aluminum.

Here, the content of nickel among the transition metals, excluding lithium, may be 50 mol% or more.

In addition, the content of aluminum in the lithium composite oxide may be greater than the content of boron.

Meanwhile, at least one of aluminum, boron, and sulfur in the lithium composite oxide may be concentrated in the surface region of the lithium composite oxide.

In one example, the sulfur-based compound may comprise $Li_2SO_4$.

Here, the lithium composite oxide may have a peak at at least one region selected from the group consisting of $2\theta$ values of $22.1°\pm0.1°$, $22.3°\pm0.1°$, $25.8°\pm0.1°$, and $28.3°\pm0.1°$ in Cu-K$\alpha$ XRD analysis.

In addition, the lithium composite oxide may have a LiOH elution amount of less than 3,279 ppm as measured by a neutralization titration method using HCl.

Meanwhile, the lithium composite oxide may have a sum of the a-axis lattice constant and the c-axis lattice constant of less than 17.0785 Å.

Here, the lithium composite oxide may be represented by Formula 1:

[Formula 1]     $Li_aNi_{1-(b+c+d+e)}M1_bM2_cAl_dB_eO_2$

Here, M1 is at least one selected from Co and Mn, M2 is at least one selected from Ba, Ce, Hf, Ta, Cr, F, Mg, Cr, V, Ti, Fe, Zr, Zn, Si, Y, Nb, Ga, Sn, Mo, W, P, Sr, Ge, Nd, Gd, and Cu, and $0.5\leq a\leq1.5$, $0\leq b\leq0.20$, $0\leq c\leq0.20$, $0<d\leq0.20$, $0<e\leq0.10$.

Meanwhile, the coating layer may further comprise at least one compound represented by Formula 2:

[Formula 2]     $Li_xM3_yS_wO_z$

Here, M3 is at least one selected from Ni, Mn, Co, Fe, Cu, Nb, Mo, Ti, B, Al, Cr, Zr, Zn, Na, K, Ca, Mg, Pt, Au, P, Eu, Sm, W, Ce, V, Ba, Ta, Sn, Hf, Ce, Gd, and Nd, $0 \leq x \leq 8$, $0 < y \leq 8$, $0 \leq w \leq 8$, and $2 \leq z \leq 13$.

According to another aspect of the present disclosure, there is provided a method for preparing a positive electrode active material, the method comprising: (a) preparing a lithium composite oxide; (b) applying a solution comprising a boron-based compound and a sulfate-based compound to a surface region of the lithium composite oxide; and (c) calcining at a temperature lower than 350°C.

Preferably, the sulfate-based compound may be aluminum sulfate.

Meanwhile, after the calcining of step (c), the content of unreacted residual LiOH and $Li_2CO_3$ may be 63.3% or less compared to before the calcining.

According to another aspect of the present disclosure, there is provided a lithium secondary battery comprising the above-described positive electrode active material.

According to the present disclosure, the lithium composite oxide included in the positive electrode active material comprises boron and sulfur, and forms a coating layer containing a sulfur-based compound on its surface region, thereby removing lithium-containing impurities and improving electrochemical characteristics and stability.

In particular, the positive electrode active material according to the present disclosure can have the sulfur-based compound concentrated on the surface of the particles within the positive electrode active material by mixing the lithium composite oxide with a light-element-containing raw material and a sulfate-based raw material and performing heat treatment during an additional calcination step.

In addition to the above-described effects, specific advantages of the present disclosure will be described in detail below together with specific embodiments for carrying out the invention.

BRIEF DESCRIPTION OF THE DRAWINGS

FIG. 1 illustrates the XRD measurement results of a positive electrode active material according to an embodiment of the present disclosure;

FIG. 2 shows an SEM image of the positive electrode active material according to an embodiment of the present disclosure;

FIG. 3 is a graph showing characteristics of the positive electrode active material according to an embodiment of the present disclosure;

FIG. 4 shows another SEM image of the positive electrode active material according to an embodiment of the present disclosure; and

FIG. 5 illustrates electrochemical characteristics of a battery including the positive electrode active material according to an embodiment of the present disclosure.

DETAILED DESCRIPTION OF EXEMPLARY EMBODIMENTS

For a better understanding of the present disclosure, certain terms are defined herein for convenience. Unless otherwise defined herein, scientific and technical terms used herein will have meanings commonly understood by those skilled in the art. In addition, unless otherwise specified in the context, the singular should be understood to include the plural, and the plural should be understood to include the singular.

Hereinafter, a positive electrode active material for a lithium secondary battery, which has improved electrochemical properties and stability, and a lithium secondary battery including the same will be described in further detail.

Positive electrode active material

According to one aspect of the present disclosure, a positive electrode active material includes a lithium composite oxide capable of lithium intercalation and deintercalation, wherein the lithium composite oxide comprises boron and sulfur, and a coating layer comprising a sulfur-based compound may be present on at least a portion of a surface region of the lithium composite oxide.

In an example, the lithium composite oxide may be present in the form of secondary particles formed by aggregation of a plurality of primary particles, or in the form of single-crystal primary particles having no grain boundaries.

When the lithium composite oxide included in the positive electrode active material defined herein is present as an aggregate of a plurality of primary particles, the lithium composite oxide may be referred to as a secondary particle.

Here, the primary particle refers to a grain or crystallite, and the secondary particle refers to an aggregate formed by agglomeration of multiple primary particles.

The primary particles constituting the lithium composite oxide may have a rod shape, an oval shape, and/or an irregular shape. In addition, unless intentionally controlled during the manufacturing process, primary particles having various shapes may coexist within the same positive electrode active material. In addition, the primary particle refers to a particle unit in which no grain boundary appears when the particle is observed at a magnification of 5,000 to 20,000 times using a scanning electron microscope.

The primary particle may be formed as a single crystallite or may be present as a plurality of crystallites. In this case, the size of the crystallite may be estimated from the diffraction pattern obtained through XRD analysis of the lithium composite oxide, or calculated by applying the full width at half maximum (FWHM) of a specific peak corresponding to a representative crystal plane into the Scherrer equation.

When the lithium composite oxide is in the form of secondary particles formed by aggregation of a plurality of primary particles, the primary particles may be spaced apart from neighboring primary particles in the secondary particle to form internal voids. In addition, the primary particles may be in contact with neighboring primary particles without forming grain boundaries, and may be in contact with the internal voids to define internal surfaces within the secondary particle. Meanwhile, the surfaces of the primary particles located on the outermost surface of the secondary particle and exposed to the external atmosphere form the surface of the secondary particle. Here, the average particle diameter (D50) of the secondary particles may vary depending on the number of aggregated primary particles, and may be in the range of 1 $\mu$m to 30 $\mu$m, for example, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, 21 $\mu$m, 22 $\mu$m, 23 $\mu$m, 24 $\mu$m, 25 $\mu$m, 26 $\mu$m, 27 $\mu$m, 28 $\mu$m, 29 $\mu$m, 30 $\mu$m, or a range between any two of these values.

Meanwhile, the term "single crystal" as used herein refers to a crystal structure in which no grain (crystallite) or grain boundary is present within a particle. The term "single-crystal primary particle" refers to a particle that exists independently without forming an aggregate. Accordingly, the phrase "lithium-based composite compound having a single-crystal structure" refers to a lithium-based composite compound in the form of a primary particle that either consists of a single crystallite or contains no grain boundary inside the primary particle.

Here, the average long-axis length of the primary particle may be in the range of 0.1 $\mu$m to 15 $\mu$m, for example, 0.1 $\mu$m, 0.5 $\mu$m, 1 $\mu$m, 1.5 $\mu$m, 2 $\mu$m, 2.5 $\mu$m, 3 $\mu$m, 3.5 $\mu$m, 4 $\mu$m, 4.5 $\mu$m, 5 $\mu$m, 5.5 $\mu$m, 6 $\mu$m, 6.5 $\mu$m, 7 $\mu$m, 7.5 $\mu$m, 8 $\mu$m, 8.5 $\mu$m, 9 $\mu$m, 9.5 $\mu$m, 10 $\mu$m, 10.5 $\mu$m, 11 $\mu$m, 11.5 $\mu$m, 12 $\mu$m, 12.5 $\mu$m, 13 $\mu$m, 13.5 $\mu$m, 14 $\mu$m, 14.5 $\mu$m, 15 $\mu$m, or a range between any two of these values, thereby enabling the implementation of an optimal electrode density for the cathode manufactured using the positive electrode active material according to various embodiments of the present disclosure.

Preferably, the lithium composite oxide may include at least one transition metal selected from the group consisting of nickel, cobalt, manganese, and aluminum.

Here, the content of nickel among the transition metals excluding lithium may be 50 mol% or more, for example, 50 mol%, 55 mol%, 60 mol%, 65 mol%, 70 mol%, 75 mol%, 80 mol%, 80.5 mol%, 81 mol%, 81.5 mol%, 82 mol%, 82.5 mol%, 83 mol%, 83.5 mol%, 84 mol%, 84.5 mol%, 85 mol%, 85.5 mol%, 86 mol%, 86.5 mol%, 87 mol%, 87.5 mol%, 88 mol%, 88.5 mol%, 89 mol%, 89.5 mol%, 90 mol%, 90.5 mol%, 91 mol%, 91.5 mol%, 92 mol%, 92.5 mol%, 93 mol%, 93.5 mol%, 94 mol%, 94.5 mol%, 95 mol%, 95.5 mol%, 96 mol%, 96.5 mol%, 97 mol%, 97.5 mol%, 98 mol%, 98.5 mol%, 99 mol%, 99.5 mol%, 99.9 mol%, or a range between any two of these values.

In high-Ni positive electrode active materials with a high nickel content, there is a problem of reduced cycle life due to decreased stability. In addition, because the Li/TM ratio (the ratio of lithium to transition metals) is high, a large amount of residual lithium remains after calcination. This residual lithium can cause gelation in the slurry during electrode fabrication, making cell manufacturing difficult.

A conventional method for removing residual lithium involves washing the positive electrode active material. However, such washing processes may damage the surface region of the positive electrode active material, which can degrade battery performance.

In contrast, the lithium composite oxide according to an embodiment of the present disclosure may be obtained by coating with an aluminum-containing raw material and a boron-containing raw material followed by heat treatment, thereby removing the residual lithium.

In this process, the aluminum-containing raw material may be doped into the lithium composite oxide to control electrochemical properties, and may also serve to remove residual lithium in place of a washing process. Here, the amount of the aluminum-containing raw material may be greater than that of the boron-containing raw material. That is, the lithium composite oxide may contain a greater amount of aluminum than boron.

Meanwhile, the lithium composite oxide may include boron and sulfur, and a coating layer present on at least a portion of the surface region of the lithium composite oxide may include a sulfur-based compound.

Here, the surface region of the lithium composite oxide where the coating layer is present may refer to the surface of a single-crystal primary particle or the surface of a secondary particle formed by aggregation of a plurality of primary particles.

Meanwhile, at least one of aluminum, boron, and sulfur in the lithium composite oxide may be concentrated in the surface region of the lithium composite oxide.

In this context, "concentration" of a specific element may refer to a condition in which the concentration of the element in a specific region of the lithium composite oxide is at least twice as high as the average concentration of the element in the lithium composite oxide.

In one example, such element concentration may be calculated from a line sum spectrum obtained by line scanning using EDS or EDX mounted on SEM or TEM, or may be confirmed by mapping a specific element onto an SEM or TEM image and comparing the density of the mapped signals.

For example, a peak in the line sum spectrum that is more than twice the average height for a given element, or a region in the mapping image showing a signal density for a given element that is more than twice the average, may indicate such concentration, but is not limited thereto.

The structure in which an element is concentrated may be formed by coating the lithium composite oxide with a sulfur- and aluminum-containing raw material and a boron-containing raw material, followed by heat treatment. However, if the heat treatment temperature is excessively high, the elements may diffuse, and the concentrated structure may not be formed. In addition, the degree of such diffusion may vary depending on the type of element.

Meanwhile, the concentrated element may form a sulfur-based compound.

Here, the "surface region" may refer to a predetermined depth from the outermost surface of the particle, for example, the outermost 10% of the particle diameter, but is not limited thereto.

In one example, the sulfur-based compound may include $Li_2SO_4$. Unlike LiOH or $Li_2CO_3$, which can cause gelation in electrode slurry, $Li_2SO_4$ is an ion-conductive material that does not cause gelation and can improve the electrochemical performance of the positive electrode active material.

Here, the lithium composite oxide may have a peak at at least one region selected from the group consisting of $2\theta$ values of $22.1°\pm0.1°$, $22.3°\pm0.1°$, $25.8°\pm0.1°$, and $28.3°\pm0.1°$ in Cu-K$\alpha$ XRD analysis. The XRD analysis is obtained using CuK$\alpha$ radiation ($\lambda$=1.540598 Å).

A peak observed in a region satisfying the above 20 range in such XRD analysis may indicate the $Li_2SO_4$ crystalline structure, which can enhance the electrochemical performance of the positive electrode active material.

In addition, the lithium composite oxide may have a LiOH elution amount of less than 3,279 ppm as measured by a neutralization titration method using HCl, for example, 3,275 ppm, 3,250 ppm, 3,225 ppm, 3,200 ppm, 3,175 ppm, 3,150 ppm, 3,125 ppm, 3,100 ppm, 3,075 ppm, 3,050 ppm, 3,025 ppm, 3,000 ppm, 2,975 ppm, 2,950 ppm, 2,925 ppm, 2,900 ppm, 2,875 ppm, 2,850 ppm, 2,825 ppm, 2,800 ppm, 2,775 ppm, 2,750 ppm, 2,725 ppm, 2,700 ppm, 2,675 ppm, 2,650 ppm, 2,625 ppm, 2,600 ppm, 2,575 ppm, 2,550 ppm, 2,525 ppm, 2,500 ppm, a range between any two of these values, or less than 2,500 ppm, but is not limited thereto.

The elution amount of LiOH is exemplary and may vary depending on the composition of the lithium composite oxide.

The LiOH elution amount may be measured according to the method of the experimental example, or calculated from the HCl consumption corresponding to the x-axis value of the first peak appearing in the differential graph obtained by differentiating the pH value with respect to the amount of HCl added during the neutralization titration.

In this case, the neutralization titration may be performed using 0.1N HCl with respect to 5 g of the positive electrode active material, and the elution amount of LiOH may be measured from a differential graph of the pH change with respect to the amount of HCl added.

Meanwhile, the lithium composite oxide may have a sum of the a-axis lattice constant and the c-axis lattice constant of less than 17.0785 Å, for example, 17.0784 Å, 17.0783 Å, 17.0782 Å, 17.0781 Å, 17.078 Å, 17.0779 Å, 17.0778 Å, 17.0777 Å, 17.0776 Å, 17.0775 Å, 17.0774 Å, 17.0773 Å, 17.0772 Å, 17.0771 Å, 17.077 Å, 17.0769 Å, 17.0768 Å, 17.0767 Å, 17.0766 Å, 17.0765 Å, 17.0764 Å, 17.0763 Å, 17.0762 Å, 17.0761 Å, 17.076 Å, 17.0759 Å, 17.0758 Å, 17.0757 Å, 17.0756 Å, 17.0755 Å, 17.0754 Å, 17.0753 Å, 17.0752 Å, 17.0751 Å, 17.075 Å, a range between any two of these values, or less than 17.075 Å, but is not limited thereto.

The sum of the a-axis and c-axis lattice constants is exemplary and may vary depending on the composition of the lithium composite oxide.

Here, the lithium composite oxide may be represented by Formula 1:

$$[\text{Formula 1}] \qquad Li_aNi_{1-(b+c+d+e)}M1_bM2_cAl_dB_eO_2$$

Here, M1 is at least one selected from Co and Mn, M2 is at least one selected from Ba, Ce, Hf, Ta, Cr, F, Mg, Cr, V, Ti, Fe, Zr, Zn, Si, Y, Nb, Ga, Sn, Mo, W, P, Sr, Ge, Nd, Gd, and Cu, and $0.5 \leq a \leq 1.5$, $0 \leq b \leq 0.20$, $0 \leq c \leq 0.20$, $0 < d \leq 0.20$, $0 < e \leq 0.10$.

The variable a represents the lithium-to-transition metal ratio in the lithium composite oxide and may be, for example, 0.5, 0.55, 0.6, 0.65, 0.7, 0.75, 0.8, 0.85, 0.9, 0.95, 1, 1.05, 1.1, 1.15, 1.2, 1.25, 1.3, 1.35, 1.4, 1.45, 1.5, or a range between any two of these values.

The variables b and c represent the respective ratios of M1 and M2 and may be, for example, 0, 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, or a range between any two of these values.

Here, M1 and M2 may be selected according to known techniques for imparting desired properties to the lithium composite oxide in a positive electrode active material.

The variable d represents the total ratio of aluminum present as both doped aluminum and aluminum concentrated in the surface region, and may be, for example, 0.001, 0.005, 0.01, 0.015, 0.02, 0.025, 0.03, 0.035, 0.04, 0.045, 0.05, 0.055, 0.06, 0.065, 0.07, 0.075, 0.08, 0.085, 0.09, 0.095, 0.10, 0.105, 0.11, 0.115, 0.12, 0.125, 0.13, 0.135, 0.14, 0.145, 0.15, 0.155, 0.16, 0.165, 0.17, 0.175, 0.18, 0.185, 0.19, 0.195, 0.20, or a range between any two of these values.

The variable e represents the ratio of boron and may be, for example, 0.001, 0.005, 0.01, 0.015, 0.02, 0.025, 0.03, 0.035, 0.04, 0.045, 0.05, 0.055, 0.06, 0.065, 0.07, 0.075, 0.08, 0.085, 0.09, 0.095, 0.10, or a range between any two of these values.

Meanwhile, the coating layer may further comprise, in addition to the above-described sulfur-based compound, other compounds. These compounds may include at least one of aluminum, boron, or sulfur concentrated in the surface region, but are not limited thereto.

For example, the coating layer may further comprise at least one compound represented by Formula 2:

[Formula 2]     $Li_xM3_yS_wO_z$

Here, M3 is at least one selected from Ni, Mn, Co, Fe, Cu, Nb, Mo, Ti, B, Al, Cr, Zr, Zn, Na, K, Ca, Mg, Pt, Au, P, Eu, Sm, W, Ce, V, Ba, Ta, Sn, Hf, Ce, Gd, and Nd, $0 \leq x \leq 8$, $0 < y \leq 8$, $0 \leq w \leq 8$, and $2 \leq z \leq 13$.

The variable x represents the ratio of lithium in the compound, and may be, for example, 0, 0.25, 0.5, 0.75, 1, 1.25, 1.5, 1.75, 2, 2.25, 2.5, 2.75, 3, 3.25, 3.5, 3.75, 4, 4.25, 4.5, 4.75, 5, 5.25, 5.5, 5.75, 6, 6.25, 6.5, 6.75, 7, 7.25, 7.5, 7.75, 8, or a range between any two of these values.

The variable y represents the ratio of M3, and may be, for example, 0.01, 0.25, 0.5, 0.75, 1, 1.25, 1.5, 1.75, 2, 2.25, 2.5, 2.75, 3, 3.25, 3.5, 3.75, 4, 4.25, 4.5, 4.75, 5, 5.25, 5.5, 5.75, 6, 6.25, 6.5, 6.75, 7, 7.25, 7.5, 7.75, 8, or a range between any two of these values.

Here, M3 may be selected in accordance with known techniques for positive electrode active materials to form a coating layer imparting desired properties to the lithium composite oxide.

The variable w represents the ratio of sulfur (S), and may be, for example, 0, 0.25, 0.5, 0.75, 1, 1.25, 1.5, 1.75, 2, 2.25, 2.5, 2.75, 3, 3.25, 3.5, 3.75, 4, 4.25, 4.5, 4.75, 5, 5.25, 5.5, 5.75, 6, 6.25, 6.5, 6.75, 7, 7.25, 7.5, 7.75, 8, or a range between any two of these values.

The variable z represents the ratio of oxygen, and may be, for example, 2, 2.5, 3, 3.5, 4, *4.5, 5, 5.5*, 6, 6.5, 7, 7.5, 8, 8.5, 9, 9.5, 10, 10.5, 11, 11.5, 12, 12.5, 13, or a range between any two of these values.

In one example, the compound represented by Formula 2 may be a boron-containing oxide such as $B_2O_3$, $Li_2O \cdot B_2O_3$, $Li_3BO_3$, $Li_2B_4O_7$, $Li_2B_2O_7$, or $Li_2B_8O_{13}$.

In another example, the compound represented by Formula 2 may be an aluminum-containing oxide such as $Al_2O_3$, $LiAlO_2$, or $LiAlsOs$.

Alternatively, the compound represented by Formula 2 may be $AlS_2O_2$, LiAlSO, or the like, but is not limited thereto.

Method for preparing positive electrode active material

According to another aspect of the present disclosure, a method for preparing a positive electrode active material may comprise: (a) preparing a lithium composite oxide; (b) applying a solution comprising a boron-based compound and a sulfate-based compound to a surface region of the lithium composite oxide; and (c) calcining at a temperature lower than 350°C.

The step (a) may be a step of preparing a lithium composite oxide that includes residual lithium in its surface region.

Here, the lithium composite oxide may be prepared by: (a1) preparing a hydroxide precursor; and (a2) mixing the hydroxide precursor prepared in step (a1) with a lithium-containing raw material and performing a first heat treatment.

The hydroxide precursor may include nickel. Additionally, the hydroxide precursor may further include at least one transition metal element selected from the group consisting of cobalt, manganese, and aluminum.

The lithium-containing raw material may be selected from LiOH and $Li_2CO_3$. The lithium-containing raw material may be added such that the molar ratio of lithium (Li) to transition metals (TM) in the hydroxide precursor, i.e., Li/TM, is from 0.5 to 1.5, for example, 0.5, 0.55, 0.6, 0.65, 0.7, 0.75, 0.8, 0.85, 0.9, 0.95, 1, 1.05, 1.1, 1.15, 1.2, 1.25, 1.3, 1.35, 1.4, 1.45, or 1.5.

Meanwhile, in step (a2), a raw material comprising at least one selected from the group consisting of Ni, Co, Mn, Al, Ba, Ce, Hf, Ta, Cr, F, Mg, Cr, V, Ti, Fe, Zr, Zn, Si, Y, Nb, Ga, Sn, Mo, W, P, Sr, Ge, Nd, Gd, and Cu may additionally be mixed. Accordingly, doping and/or coating of specific elements may be performed on the lithium composite oxide.

In addition, step (a2) may be performed one or more times, for example, once, twice, or three times. In such repeated operations, the types and amounts of raw materials added may vary.

The step (b) is a step of applying a solution comprising a boron-based compound and a sulfate-based compound to the lithium composite oxide prepared in step (a).

Here, the solution may be an aqueous solution in which the boron-based compound and the sulfate-based compound are mixed. The boron-based compound may be selected from $H_3BO_3$, $B_2O_3$, $Li_2O \cdot B_2O_3$, $Li_3BO_3$, $Li_2B_4O_7$, $Li_2B_2O_7$, $Li_2B_8O_{13}$, and the like, and may be mixed in an amount of 0.1 to 1.5 wt% based on the weight of the lithium composite oxide of step (a), for example, 0.1 wt%, 0.2 wt%, 0.3 wt%, 0.4 wt%, 0.5 wt%, 0.6 wt%, 0.7 wt%, 0.8 wt%, 0.9 wt%, 1 wt%, 1.1 wt%, 1.2 wt%, 1.3 wt%, 1.4 wt%, 1.5 wt%, or a range between any two of these values, but is not limited thereto.

Meanwhile, the sulfate-based compound may be aluminum sulfate, and may be mixed in an amount of 0.1 to 1 mol% based on the lithium composite oxide of step (a), for example, 0.1 mol%, 0.2 mol%, 0.3 mol%, 0.4 mol%, 0.5 mol%, 0.6 mol%, 0.7 mol%, 0.8 mol%, 0.9 mol%, 1 mol%, or a range between any two of these values, but is not limited thereto.

The solution may be applied to the surface of the lithium composite oxide of step (a) by a spray coating method, but is not limited thereto as long as the method can uniformly coat the solution.

The step (c) may be a calcination step performed at a temperature lower than 350 °C, for example, 349 °C, 345 °C, 340 °C, 335 °C, 330 °C, 325 °C, 320 °C, 315 °C, 310 °C, 305 °C, 300°C, 295°C, 290°C, 285 °C, 280°C, 275 °C, 270°C, 265 °C, 260 °C, 255 °C, 250°C, 245°C, 240 °C, 235 °C, 230 °C, 225 °C, 220 °C, 215 °C, 210 °C, 205 °C, 200 °C, or a range between any two of these values, but is not limited thereto.

If the calcination temperature deviates from the above range, certain elements may diffuse instead of being concentrated in the surface region, making it difficult to sufficiently remove residual lithium or form a proper coating layer.

Meanwhile, after the calcination of step (c), the content of unreacted residual LiOH and $Li_2CO_3$ may be 63.3% or less compared to before calcination, for example, 63.3%, 63.2%, 63.1%, 63%, 62.9%, 62.8%, 62.7%, 62.6%, 62.5%, 62.4%, 62.3%, 62.2%, 62.1%, 62%, 61.9%, 61.8%, 61.7%, 61.6%, 61.5%, 61.4%, 61.3%, 61.2%, 61.1%, 61%, 60.9%, 60.8%, 60.7%, 60.6%, 60.5%, 60.4%, 60.3%, 60.2%, 60.1%, 60%, a range between any two of these values, or less than 60%.

According to the above method, unreacted residual lithium can be sufficiently removed without a washing process.

Lithium secondary battery

According to another embodiment of the present disclosure, a positive electrode including a positive electrode current collector and a positive electrode active material layer formed on the positive electrode current collector may be provided. Here, the positive electrode active material may include lithium composite oxides according to various embodiments of the present disclosure as a positive electrode active material.

Therefore, detailed description of the lithium composite oxides will be omitted, and other components that have not been described will be explained. In addition, hereinafter, the above-described lithium composite oxide will be referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 $\mu$m, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present disclosure is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methyl pyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to prepare a positive electrode.

In addition, in another exemplary embodiment, the positive electrode may be prepared by casting the positive electrode slurry composition on a separate support, and laminating a film obtained by delamination from the support on the positive electrode current collector.

Still another aspect of the present disclosure provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and an electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 $\mu$m, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as $SiO_\beta$ ($0<\beta<2$), $SnO_2$, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

Preferably, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

In addition, preferably, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator is not particularly limited as long as it is generally used in a lithium secondary battery to separate a negative electrode from a positive electrode and provide a diffusion path for lithium ions, and particularly, the separator has a low resistance to ion mobility of an electrolyte and an excellent electrolyte solution impregnation ability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present disclosure may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in the manufacture of a lithium secondary battery, but the present disclosure is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/-discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

When the electrolyte used in the present disclosure is a solid electrolyte, solid inorganic electrolytes such as sulfide-based solid electrolytes, oxide-based solid electrolytes, nitride-based solid electrolytes, or halide-based solid electrolytes may be used, and preferably, a sulfide-based solid electrolyte may be used.

As materials for the sulfide-based solid electrolyte, solid electrolytes containing Li, an X element (where X is at least one selected from P, As, Sb, Si, Ge, Sn, B, Al, Ga, and In), and S may be used. Examples of such sulfide-based solid electrolyte materials include: $Li_2S-P_2S_5$, $Li_2S-P_2S_5-LiX$ (where X is a halogen element such as I or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (where m and n are integers and Z is Ge, Zn, or Ga), $Li_2S-GeS_2$, $Li_2S-SiS_2-Li_3PO_4$, $Li_2S-SiS_2-Li_pMO_q$ (where p and q are integers and M is P, Si, Ge, B, Al, Ga, or In), and the like.

The solid electrolyte, preferably the sulfide-based solid electrolyte, may be amorphous, crystalline, or a mixture of amorphous and crystalline phases.

As materials for oxide-based solid electrolytes, the following may be used: $Li_7La_3Zr_2O_{12}$, $Li_{7-x}La_3Zr_{1-x}Nb_xO_{12}$, $Li_{7-3x}La_3Zr_2Al_xO_{12}$, $Li_{3x}La_{2/3-x}TiO_3$, $Li_{1+x}Al_xTi_{2-x}(PO_4)_3$, $Li_{1+x}Al_xGe_{2-x}(PO_4)_3$, $Li_3PO_4$, $Li_{3+x}PO_{4-x}N_x$ (LiPON), $Li_{2+2x}Zn_{1-x}GeO_4$ (LISICON), and others.

The above-described solid electrolyte may be disposed as a separate layer (solid electrolyte layer) between the positive electrode and the negative electrode. In addition, the solid electrolyte may be partially included within the positive electrode active material layer independently of the solid electrolyte layer, or it may be partially included within the negative electrode active material layer independently of the solid electrolyte layer.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present disclosure stably exhibits excellent discharge capacity, excellent output characteristics and excellent lifespan characteristics, it is useful in portable devices such as a mobile phone, a notebook computer and a digital camera and an electric automobile field such as a hybrid electric vehicle (HEV).

The outer shape of the lithium secondary battery according to the present disclosure is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to yet another exemplary embodiment of the present disclosure, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Preparation Example 1. Preparation of positive electrode active material

Example 1

(a) Precursor Preparation

An aqueous solution in which $NiSO_4 \cdot 6H_2O$, $CoSO_4 \cdot 7H_2O$, and $MnSO_4 \cdot H_2O$ were mixed in a molar ratio of 95:2:3 was introduced into a reactor along with NaOH and $NH_4OH$ under stirring. The temperature inside the reactor was maintained at 45 °C, and the precursor synthesis reaction was carried out while introducing $N_2$ gas into the reactor. After the reaction was completed, washing and dehydration were performed to obtain a hydroxide precursor having a composition of $Ni_{0.95}Co_{0.02}Mn_{0.03}(OH)_2$.

(b) First Heat Treatment

The hydroxide precursor obtained in step (a) was mixed with LiOH as a lithium source (Li/metal molar ratio = 1.00), and $Al(OH)_3$ was added such that the content of Al, based on the total metal elements excluding lithium, was 0.5 mol%. The mixture was then prepared. Subsequently, a calcination furnace under an $O_2$ atmosphere was ramped up to 730 °C over 6 hours and 10 minutes, and the mixture was heat-treated for 10 hours. After furnace cooling, a first positive electrode active material comprising a lithium composite oxide was obtained.

(c) Second Heat Treatment

The first positive electrode active material obtained in step (b) was mixed with $Co(OH)_2$ in an amount corresponding to 1.0 mol% Co based on the total metal elements excluding lithium, and with 1.0 mol% LiOH. The resulting mixture was then heated in a calcination furnace under an $O_2$ atmosphere, ramped to 700 °C over 2 hours, and maintained at that temperature for 8 hours. After furnace cooling, a second positive electrode active material comprising a lithium composite oxide was obtained.

(d) Third Heat Treatment

$H_3BO_3$ was weighed to 0.4 wt% based on the second positive electrode active material obtained in step (c), and DIW was added to prepare a solution in which the $H_3BO_3$ concentration was 7.5 wt%. $Al_2(SO_4)_2$ was then weighed to 0.25 mol% based on the second positive electrode active material and added to the solution. The prepared solution was sprayed onto the second positive electrode active material using a spray coating method in a predetermined amount while mixing. The resulting mixture was heat-treated in a calcination furnace under an $O_2$ atmosphere by ramping to 300 °C over 1 hour and maintaining for 8 hours. After furnace cooling, a third positive electrode active material comprising a lithium composite oxide (average particle diameter: 14 $\mu$m) was obtained.

Example 2

Except for the addition of 0.5 mol% of $Al_2(SO_4)_2$ in step (d), a positive electrode active material was prepared in the same manner as in Example 1.

Comparative Example 1

Except that $Al_2(SO_4)_2$ was not added in step (d), a positive electrode active material was prepared in the same manner as in Example 1.

Comparative Example 2

Except that $Al_2(SO_4)_2$ was not added and 0.5 mol% of $(NH_4)_2SO_4$ was added in step (d), a positive electrode active material was prepared in the same manner as in Example 1.

Comparative Example 3

Except that the calcination temperature in step (d) was changed to 350 °C, a positive electrode active material was prepared in the same manner as in Example 1.

Comparative Example 4

Except that the calcination temperature in step (d) was changed to 400 °C, a positive electrode active material was prepared in the same manner as in Example 1.

Comparative Example 5

Except that the calcination temperature in step (d) was changed to 600 °C, a positive electrode active material was prepared in the same manner as in Example 1.

**Experimental Example 1. Analysis of components of positive electrode active material**

The elution amounts of unreacted residual lithium in the first, second, and third positive electrode active materials of Preparation Example 1 were measured using a neutralization titration method with HCl.
Here, the content of unreacted residual lithium was measured based on the amount of 0.1 M HCl used until the pH reached 4 during pH titration. First, 5 g of the positive electrode active material was added to 100 mL of DIW and stirred for 15 minutes. The mixture was then filtered, and 50 mL of the filtrate was collected. Subsequently, 0.1 M HCl was added to the filtrate, and the amount of HCl consumed as the pH changed was measured to determine Q1 and Q2. The elution amounts of unreacted LiOH and $Li_2CO_3$ were calculated using the following formulas:

$$M1 = 23.94 \text{ (LiOH Molecular weight)}$$

$$M2 = 73.89 \text{ (Li}_2\text{CO}_3 \text{ Molecular weight)}$$

$$\text{SPL Size} = (\text{Sample weight} \times \text{Solution Weight}) / \text{Water Weight}$$

$$\text{LiOH (wt\%)} = [(Q1-Q2) \times C \times M1 \times 100]/(\text{SPL Size} \times 1000)$$

$$\text{Li}_2\text{CO}_3 \text{ (wt\%)} = [2 \times Q2 \times C \times M2/2 \times 100]/(\text{SPL Size} \times 1000)$$

Using this method, the elution amounts of unreacted LiOH and $Li_2CO_3$ in the lithium composite oxides prepared in the above examples and comparative examples were measured. The results are shown in Table 1 below:

[Table 1]

| Classification | | Example 1 | Example 2 | Comparative Example 1 | Comparative Example 2 | Comparative Example 3 | Comparative Example 4 |
|---|---|---|---|---|---|---|---|
| First Calcination Residual Lithium (ppm) | LiOH | 6,064 | 6,064 | 6,064 | 6,064 | 6,064 | 6,064 |
| | $Li_2CO_3$ | 4,924 | 4,924 | 4,924 | 4,924 | 4,924 | 4,924 |
| Second Calcination Residual Lithium (ppm) | LiOH | 7,991 | 7,991 | 7,991 | 7,991 | 7,991 | 7,991 |
| | $Li_2CO_3$ | 4,688 | 4,688 | 4,688 | 4,688 | 4,688 | 4,688 |
| Third Calcination Residual Lithium (ppm) | LiOH | 2,995 | 2,875 | 3,382 | 3,507 | 3,279 | 3,718 |
| | $Li_2CO_3$ | 4,767 | 4,869 | 4,785 | 5,138 | 4,747 | 4,488 |

Referring to Table 2, it can be confirmed that the sulfur (S) content increased with the application of a sulfate-based material, and the aluminum (Al) content increased upon treatment with an aluminum-based material.

**Experimental Example 4. SEM Analysis of Positive Electrode Active Material**

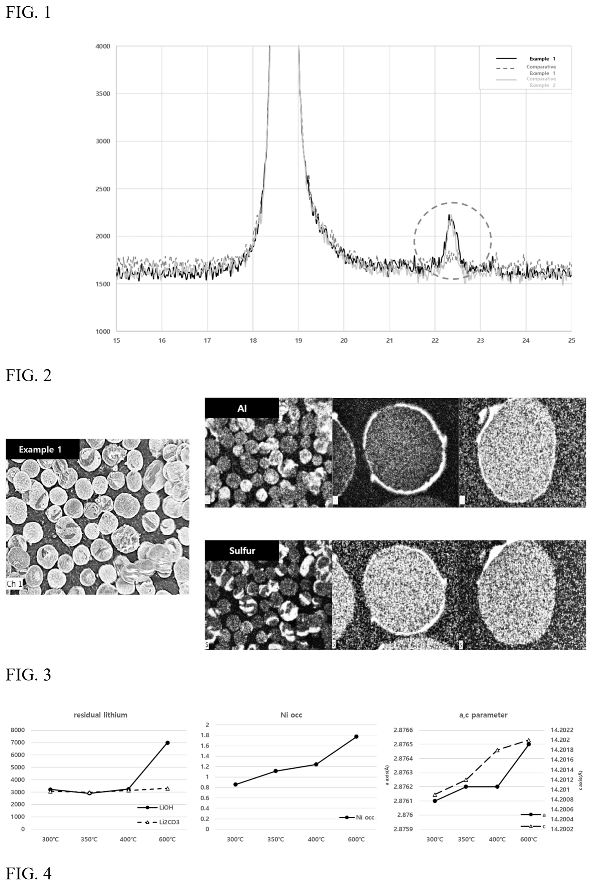

SEM images of the lithium composite oxide included in the positive electrode active material prepared according to the embodiment were obtained using an FE-SEM device and are shown in FIG. 2.

Referring to FIG. 2, it can be seen that the sulfate-based compound chemically reacted with residual lithium, resulting in the localized distribution of aluminum (Al) and sulfur (S) on the surface region. Considering the findings from the previous XRD analysis, the sulfur (S) is predicted to exist in the form of $Li_2SO_4$.

**Experimental Example 5. Analysis of Properties Depending on Calcination Temperature of Positive Electrode Active Material**

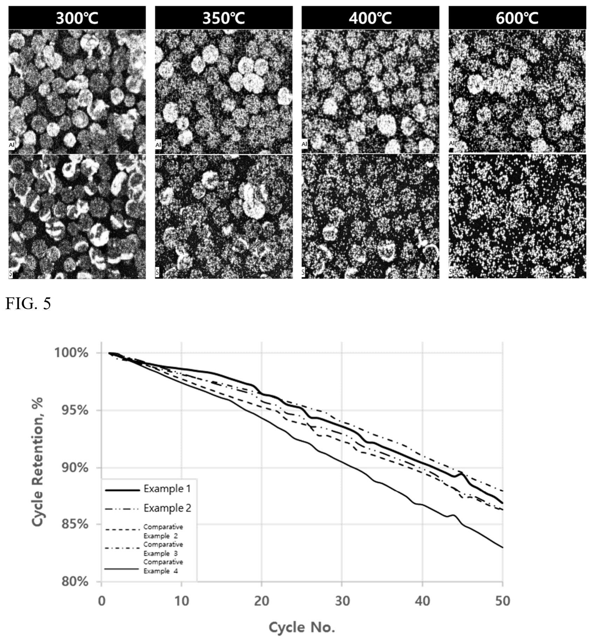

To investigate the effect of the calcination temperature in step (d), the properties of the third positive electrode active materials prepared in Example 1, Comparative Example 3, Comparative Example 4, and Comparative Example 5 were analyzed using the methods described in Experimental Examples 1 to 4. The results are presented in Table 3, FIG. 3, and FIG. 4.

[Table 3]

| Classification | Example 1 | Comparative Example 3 | Comparative Example 4 | Comparative Example 5 |
|---|---|---|---|---|
| a-axis lattice constant (Å) | 2.8761 | 2.8762 | 2.8762 | 2.8765 |
| c-axis lattice constant (Å) | 14.2009 | 14.2012 | 14.2018 | 14.2020 |
| Sum of lattice constants (Å) | 17.077 | 17.0774 | 17.078 | 17.0785 |

Referring to FIG. 3, it can be seen that, as the calcination temperature in step (d) increases, the residual lithium content, the occupancy of Ni metal at the Li 3a site (Ni occ.), the a-axis lattice constant, and the c-axis lattice constant all increase.

Here, the occupancy of Ni metal can be interpreted as evidence of aluminum (Al) doping. In addition, since the electronegativity of $Al^{3+}$ (1.513) is relatively lower than that of $Ni^{3+}$ (1.695), Al doping leads to a reduction in the TM-O bond strength, which increases the repulsive force between oxygen layers. As a result, both the a-axis lattice constant and the c-axis lattice constant appear to have increased.

Referring to FIG. 4, differences in the surface composition and crystal structure of aluminum (Al) and sulfur (S) according to calcination temperature can be observed.

## Preparation Example 2. Manufacture of lithium secondary battery

A positive electrode slurry was prepared by dispersing 94 wt% of each of the positive electrode active materials prepared according to Preparation Example 1, 3 wt% of artificial graphite and 3 wt% of a PVDF binder in 3.5 g of N-methyl-2-pyrrolidone (NMP). The slurry was applied to and dried on an aluminum (Al) foil having a thickness of 20 $\mu$m, which served as a positive electrode current collector, followed by roll pressing to fabricate a positive electrode. The loading level of the electrode was 7 $mg/cm^2$, and the electrode density was 3.2 $g/cm^3$.

A coin cell was fabricated using the above-described positive electrode, with lithium foil as the counter electrode, a porous polyethylene separator (Celgard 2300, thickness: 25 $\mu$m), and a liquid electrolyte comprising 1.15 M $LiPF_6$ dissolved in a mixed solvent of ethylene carbonate (EC) and ethyl methyl carbonate (EMC) at a volume ratio of 3:7, according to a conventionally known fabrication process.

## Experimental Example 6. Evaluation of Electrochemical Properties of Lithium Secondary Battery

The lithium secondary battery (coin cell) fabricated in Preparation Example 2 was evaluated using an electrochemical analyzer (Toyo, Toscat-3100) under the following conditions: at 25 °C, within a voltage range of 2.7 V to 4.3 V, and with a discharge rate of 0.05 C. Initial charge capacity, initial discharge capacity, and initial coulombic efficiency were measured.

The measurement results are shown in Table 4 and Figure 5 below.

[Table 4]

| Classification | | Example 1 | Example 2 | Comparative Example 1 | Comparative Example 2 | Comparative Example 3 | Comparative Example 4 |
|---|---|---|---|---|---|---|---|
| Electrochemical Properties | Charge Capacity (mAh/g) | 244.2 | 243.2 | 240.5 | 242.5 | 243.6 | 243.1 |
| | Discharge Capacity (mAh/g) | 223.7 | 223.0 | 219.6 | 221.7 | 222.5 | 222.7 |
| | Efficiency (%) | 91.6 | 91.7 | 91.3 | 91.4 | 91.3 | 91.6 |

Referring to the results in Table 4 and Figure 5, it can be seen that the formation of the conductive material $Li_2SO_4$ on the surface leads to an increased capacity compared to Comparative Example 1, in which only boron (B) was applied. In addition, the formation of an aluminum coating layer on the surface in the Example contributes to improved cycle life characteristics.

In the above, the embodiments of the present disclosure have been described, but it will be understood by those of ordinary skill in the art that the present disclosure may be changed and modified in various ways by addition, alteration, or deletion of components without departing from the spirit of the present disclosure defined in the appended claims.

## Claims

1. A positive electrode active material comprising a lithium composite oxide capable of lithium intercalation and deintercalation,

   wherein the lithium composite oxide comprises boron and sulfur, and
   a coating layer comprising a sulfur-based compound is present on at least a portion of a surface region of the lithium composite oxide.

2. The positive electrode active material according to claim 1, wherein the lithium composite oxide comprises at least one transition metal selected from the group consisting of nickel, cobalt, manganese, and aluminum.

3. The positive electrode active material according to claim 2, wherein the content of nickel among the transition metals excluding lithium in the lithium composite oxide is 50 mol% or more.

4. The positive electrode active material according to any one of claims 2 or 3, wherein the content of aluminum in the lithium composite oxide is greater than the content of boron.

5. The positive electrode active material according to any one of claims 2 to 4, wherein at least one of aluminum, boron, and sulfur in the lithium composite oxide is concentrated in a surface region of the lithium composite oxide.

6. The positive electrode active material according to any one of claims 1 to 5, wherein the sulfur-based compound comprises $Li_2SO_4$.

7. The positive electrode active material according to claim 6, wherein the lithium composite oxide has a peak at at least one region selected from the group consisting of $2\theta$ values of $22.1°\pm0.1°$, $22.3°\pm0.1°$, $25.8°\pm0.1°$, and $28.3°\pm0.1°$ in Cu-K$\alpha$ XRD analysis.

8. The positive electrode active material according to any one of claims 1 to 7, wherein the lithium composite oxide has a LiOH elution amount of less than 3,279 ppm as measured by a neutralization titration method using HCl.

9. The positive electrode active material according to any one of claims 1 to 8, wherein the sum of the a-axis lattice constant and the c-axis lattice constant of the lithium composite oxide is less than 17.0785 Å.

10. The positive electrode active material according to any one of claims 1 to 9, wherein the lithium composite oxide is represented by Formula 1:

    [Formula 1]     $Li_aNi_{1-(b+c+d+e)}M1_bM2_cAl_dB_eO_2$

    Here,

    M1 is at least one selected from Co and Mn,
    M2 is at least one selected from Ba, Ce, Hf, Ta, Cr, F, Mg, Cr, V, Ti, Fe, Zr, Zn, Si, Y, Nb, Ga, Sn, Mo, W, P, Sr, Ge, Nd, Gd, and Cu,
    and $0.5\leq a\leq1.5$, $0\leq b\leq0.20$, $0\leq c\leq0.20$, $0<d\leq0.20$, $0<e\leq0.10$.

11. The positive electrode active material according to any one of claims 1 to 10, wherein the coating layer further comprises at least one compound represented by Formula 2:

    [Formula 2]     $Li_xM3_yS_wO_z$

Here,

M3 is at least one selected from the group consisting of Ni, Mn, Co, Fe, Cu, Nb, Mo, Ti, B, Al, Cr, Zr, Zn, Na, K, Ca, Mg, Pt, Au, P, Eu, Sm, W, Ce, V, Ba, Ta, Sn, Hf, Ce, Gd, and Nd,

$0 \leq x \leq 8$, $0 < y \leq 8$, $0 \leq w \leq 8$, and $2 \leq z \leq 13$.

12. A method for preparing a positive electrode active material, comprising:

(a) preparing a lithium composite oxide;
(b) applying a solution comprising a boron-based compound and a sulfate-based compound to a surface region of the lithium composite oxide; and
(c) calcining at a temperature lower than 350°C.

13. The method for preparing a positive electrode active material according to claim 12, wherein the sulfate-based compound is aluminum sulfate.

14. The method for preparing a positive electrode active material according to any one of claims 12 or 13, wherein, after the calcining of step (c), the content of unreacted residual LiOH and $Li_2CO_3$ is 63.3% or less compared to before the calcining.

15. A lithium secondary battery comprising the positive electrode active material according to any one of claims 1 to 11.

FIG. 1

FIG. 2

FIG. 3

FIG. 4

FIG. 5

Europäisches
Patentamt
European
Patent Office
Office européen
des brevets

# EUROPEAN SEARCH REPORT

**Application Number**

EP 25 21 1895

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/173392 A1 (OKUGAWA TAKAHIRO [JP] ET AL) 2 June 2022 (2022-06-02) <br> * paragraphs [0489] - [0510]; examples 1-4 * <br> ----- | 1-3,5 | INV. <br> H01M4/36 <br> C01G53/50 <br> H01M4/505 <br> H01M4/525 |
| A | US 2023/343954 A1 (YU ZHENFENG [US] ET AL) 26 October 2023 (2023-10-26) <br> * paragraphs [0402] - [0408] * <br> ----- | 1-15 | |
| A | KR 101 651 338 B1 (LG CHEMICAL LTD [KR]) 25 August 2016 (2016-08-25) <br> * paragraphs [0083] - [0094] * <br> ----- | 1-15 | |

**TECHNICAL FIELDS
SEARCHED (IPC)**

H01M
C01D
C01G

The present search report has been drawn up for all claims

| Place of search | Date of completion of the search | Examiner |
|---|---|---|
| Munich | 27 March 2026 | González Junquera, J |

EPO FORM 1503 03.82 (P04C01)

## ANNEX TO THE EUROPEAN SEARCH REPORT
## ON EUROPEAN PATENT APPLICATION NO.

EP 25 21 1895

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | | Publication date | Patent family member(s) | | Publication date |
|---|---|---|---|---|---|
| US 2022173392 | A1 | 02-06-2022 | CN | 113677631 A | 19-11-2021 |
| | | | EP | 3954661 A1 | 16-02-2022 |
| | | | JP | 6659895 B1 | 04-03-2020 |
| | | | JP | 2020172422 A | 22-10-2020 |
| | | | KR | 20210151085 A | 13-12-2021 |
| | | | US | 2022173392 A1 | 02-06-2022 |
| | | | WO | 2020208963 A1 | 15-10-2020 |
| US 2023343954 | A1 | 26-10-2023 | EP | 4211734 A1 | 19-07-2023 |
| | | | JP | 2023540135 A | 21-09-2023 |
| | | | KR | 20230071150 A | 23-05-2023 |
| | | | US | 2023343954 A1 | 26-10-2023 |
| | | | WO | 2022056039 A1 | 17-03-2022 |
| KR 101651338 | B1 | 25-08-2016 | CN | 104781960 A | 15-07-2015 |
| | | | EP | 3065207 A1 | 07-09-2016 |
| | | | JP | 6284542 B2 | 28-02-2018 |
| | | | JP | 2015536558 A | 21-12-2015 |
| | | | KR | 20150050458 A | 08-05-2015 |
| | | | TW | 201539846 A | 16-10-2015 |
| | | | US | 2016013476 A1 | 14-01-2016 |
| | | | US | 2018351169 A1 | 06-12-2018 |
| | | | WO | 2015065046 A1 | 07-05-2015 |

EPO FORM P0459

For more details about this annex : see Official Journal of the European Patent Office, No. 12/82

**EP 4 746 069 A1**

## REFERENCES CITED IN THE DESCRIPTION

### Patent documents cited in the description

- KR 1020150069334
- KR 101651338